Europäisches Patentamt

European Patent Office

Office européen des brevets

(11) Publication number: **0 050 404**

**B1**

(12) **EUROPEAN PATENT SPECIFICATION**

(45) Date of publication of patent specification: **28.11.84**

(21) Application number: **81303625.8**

(22) Date of filing: **07.08.81**

(51) Int. Cl.³: **G 06 F 9/26**

(54) **Micro-programmed pipeline computer and method of operating the same.**

(30) Priority: **20.10.80 US 198888**

(43) Date of publication of application:
**28.04.82 Bulletin 82/17**

(45) Publication of the grant of the patent:
**28.11.84 Bulletin 84/48**

(84) Designated Contracting States:
**DE FR GB**

(56) References cited:
**US-A-3 736 567**
**US-A-4 131 943**

**ELECTRICAL DESIGN NEWS (E DN), vol. 25,
March 1980, Denver, US, BARON: "Control
your next pipeline design with a
microprogrammed sequencer", pages 157-162
Le Nouvel Automatisme, Janvier-Fevrier 1979,
pages 31-39**

(73) Proprietor: **CONTROL DATA CORPORATION
8100-34th Avenue South
Minneapolis Minnesota 55440 (US)**

(72) Inventor: **Lane, Thomas Alan
4048 86th Lane Northeast
New Brighton Minnesota 55112 (US)**

(74) Representative: **Caro, William Egerton et al
J. MILLER & CO. Lincoln House 296-302 High
Holborn
London WC1V 7JH (GB)**

Courier Press, Leamington Spa, England.

## Description

This invention relates to a microprogrammed pipeline computer with probable branch predictions of conditional branching and. to a method of operating the same.

More particularly, the present invention seeks to provide a microcode sequencing technique (for example, conditional branching) in a computer done in such a way as to maximize the pipeline execution rate. The computer described is presumed to be a pipeline structure in which a single phase clocking phase clocking system is used to clock the pipeline. The instruction execution rate is proportional to the clocking rate, thus minimizing the clock cycle time which is critical to achieving maximum performance. The computer utilises microprogrammed control, thus one of the pipeline segments consists of the microcode control store. A microcode control store is the memory used to store the microinstructions. A microinstruction is the contents of a single control store address and contains the bits used for control. The hardware design must be capable of accessing one microinstruction per clock. This means that the minimum clock cycle time must be at least as long as the access time of the memory chip plus the input and output pipeline registers. Thus, the present invention seeks to implement a microprogrammed control unit in a pipeline computer in which the clock cycle is the minimum described and the clocking rate is at a maximum rate for any given memory chip.

A known microprogrammed pipeline computer with probable branch predictions as defined in the first portion of claim 1 is described in an article entitled "Control your next pipeline design with a microprogrammed sequencer" by M. Baron (Electrical Design News, Vol. 25, March 1980, pages 157 to 162). This known computer comprises an address multiplexer having input means for receiving original microinstruction addresses derived from macroinstructions, input means for receiving branch microinstruction addresses from an output register means, and input means for receiving incremented microinstruction addresses, the selection of an output of the address multiplexer being arranged to be controlled by an address select logic network; and microinstruction memory means connected between an output of the address multiplexer and an input of the output register means.

Prior art computers for this purpose usually have at least one additional logic level between the various registers in the pipeline. These additional logic levels directly increase the clock cycle time period. A typical example is for some control store bits to be used to control the selection of the control store address at the next clock cycle time. In this example, the clock cycle time is computed as: memory access time plus register delay time plus multiplexer select path delay time. These designs all have a decision interval of one clock. That is, the current microinstruction always knows how to address the next microinstruction. The cost of obtaining the decision time of one is the extra gate levels described.

U.S. Patent Specification No. 3 736 567 describes a control store with a first addressable memory storing, in addition to macroinstructions, single microinstructions which are transferred to an output register via a select logic network. It also discloses a second addressable multiple microinstruction memory the output of which is also transferred to the output register via the select logic network. However, it is extremely inefficient to take microcode instructions from the main memory for single addresses.

U.S. Patent Specification No. 4 131 943 describes a microcontrol unit for conditional branching with a ROM which is addressed by an address register. The ROM is divided into a first portion which is used for two or more word type instructions and a second portion which is used for one word type instructions.

An article on pages 31 to 39 of Le Nouvel Automatisme, January—February 1979 describes the operation of sequencers and gives examples of known systems. The article shows that the selection of subroutines is equivalent to sequential microinstructions.

The present invention solves the problem of how to design a microprogrammed pipeline computer which comes very close to total microinstruction execution with a decision interval of one clock cycle without suffering additional gate delays normally required to generally guarantee a decision interval of one clock cycle.

According to one aspect of the present invention there is provided a microprogrammed pipeline computer of the type detailed above characterised in that the micro-instruction memory means comprises a control store address register for receiving the output of the address multiplexer, a single microinstruction memory for receiving the output from the control store address register and for producing a memory output, a multiple microinstruction memory for receiving the output from the control store address register and for producing an output, and memory select means for receiving the outputs of the single microinstruction memory and the multiple microinstruction memory and for providing an output consisting of a selected memory output to the output register means, the memory select means being arranged to be controlled by a single microinstruction flip-flop which is connected to receive an output from the address multiplexer, and further characterised by comprising: a branch logic network for producing a control output which is provided to the address select logic network; means for providing branch condition inputs to the branch logic network;

instruction register means for receiving macro program instructions; instruction mapping memory means for receiving instructions from the instruction register means; instruction map register means for receiving the output of the instruction mapping memory means and being connected to the input means for transferring original microinstruction addresses derived from the macroinstruction to the address multiplexer; and first, second, third and fourth valid flip-flops which are connected in series and associated, respectively, with the instruction register means, the instruction map register means, the control store address register means and the output register means, the first to fourth valid flip-flops being arranged to indicate valid data therein and to control purging of the respective register means which are clocked by a single clocking logic during a single clock cycle, the branch logic network providing, in operation, a control signal to at least one of the flip-flops in the event a branch is taken to purge the contents of the respective register means.

In the present invention, sequential, multiple microinstructions which are not conditional and multiple microinstructions where branching is conditional are efficiently sent. The invention has the ability to shift from one mode to the other or to resume a multiple microinstruction branch, when the wrong branch was originally selected, within one clock cycle. The invention is provided with a purge recovery system so that operation thereof can be restored within one clock cycle when necessary.

The present invention does not have a guaranteed decision interval of one clock cycle: in most applications, the decision interval will be one clock. This does not mean however that a decision interval of one clock cycle is guaranteed, since no control store bits feed directly back to select the next data for the control store address register. However, for most of the time the decision interval will be one clock cycle, the only exception being a wrong prediction on a microcode conditional branch.

The use of the microprogrammed control in the computer is to decode instructions. More specifically, opcodes are received from the instruction register and used to generate the specific control signals that cause the instruction to be executed in the computer. In the present invention, the microprogrammed control categorize instructions received into two classes, single microinstructions and multiple microinstructions. A single microinstruction is one in which only a single microcode instruction is issued to the machine to cause the instruction to be fully executed. A multiple microcode instruction is one in which more than one microde instruction must be issued to the machine to cause the instruction to be executed.

Once instructions are brought into the microprogrammed control unit, they execute in one of the three ways: (1) single microinstructions, (2) sequential multiple microinstructions, and (3) sequential multiple microinstructions with conditional branching instructions. With respect to microcode sequencing, with case 1, the only sequencing required by a microinstruction is to go to the first microinstruction of the next instruction. In case 2, the only sequencing used between microinstructions is increment. In case 3, many types of sequencing are supported, including increment, conditional branch, subroutine call and return, unconditional branch and repeat.

Thus, a banked control store according to the present invention can handle cases 1 and 2 with a decision interval equal to one clock cycle, since the design will always do a correct lookahead, and will handle all branches of case 3 with a decision interval of one clock cycle if the branch is not taken and a decision interval of two clock cycles if the branch is taken. This is because the hardware makes a look-ahead guess of the next address. When the guess is correct, the decision interval is one clock cycle. When the guess is incorrect, the guess is purged and the correct path is resumed with a decision interval of two clock cycles.

In computer applications, most of the instruction microcode is classified as case 1 or 2. The small number of case 3 instructions can be handled efficiently if the branch probabilities are known, which is often the case. Practice of the present invention can come very close to total execution with a decision interval of one clock cycle without suffering the additional gate delays required to guarantee a decision interval of one clock cycle.

The present invention also relates to a method of operating a pipeline computer as detailed in the appendant claims. Preferred features of the pipeline computer and the method of operating the same of the present invention will become apparent from the claims.

The invention is illustrated, merely by way of example, in the accompanying drawings, in which:—

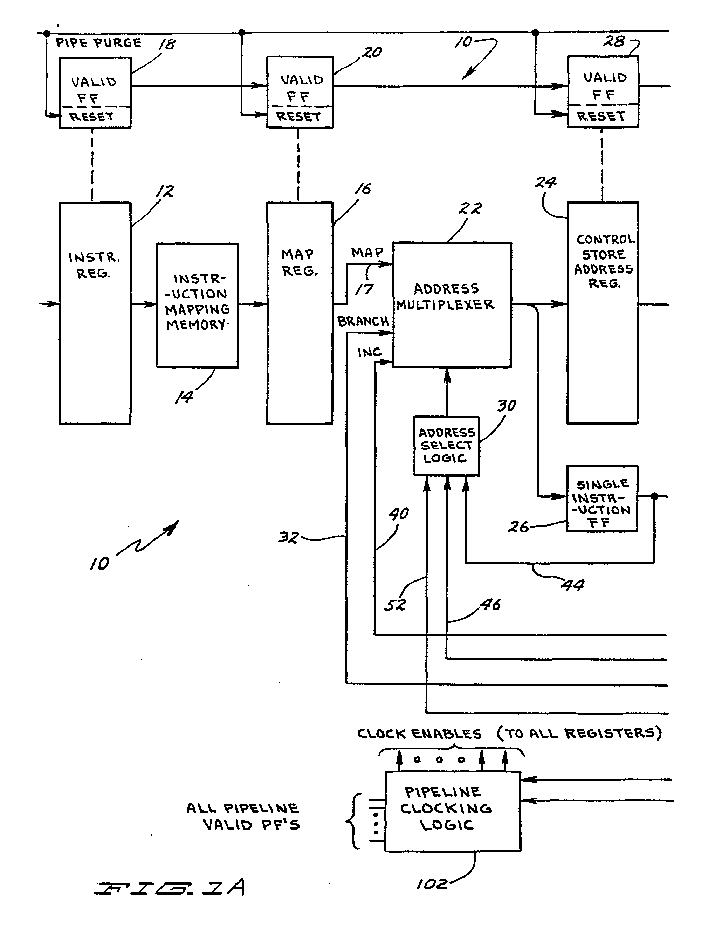

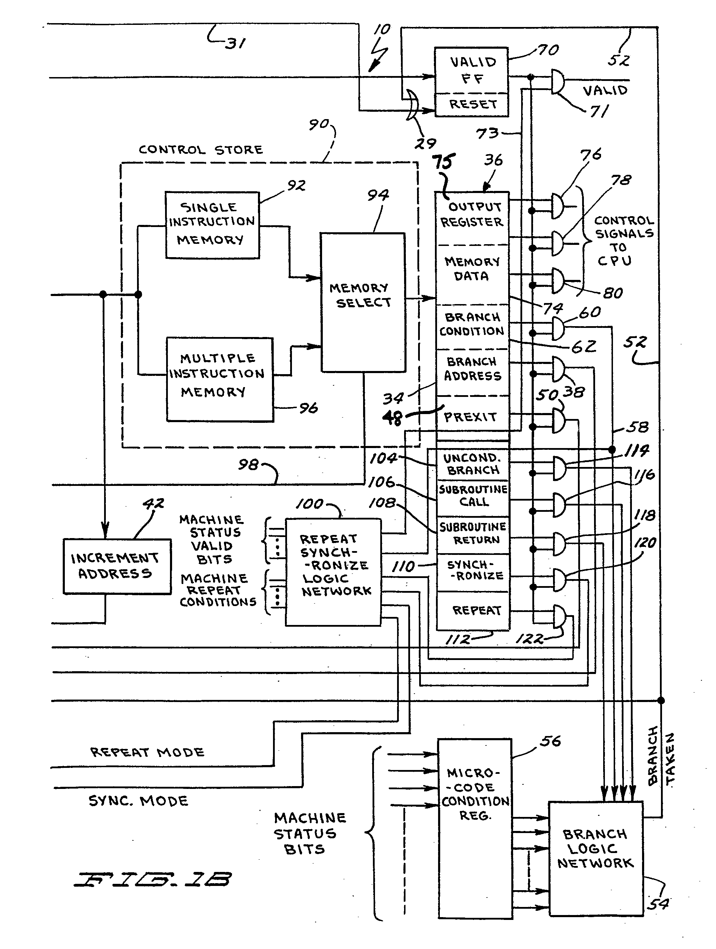

Figure 1A and 1B are to be viewed in side by side relationship and are a block schematic diagram of a banked control store according to the present invention for conditional branching.

Referring to the drawings, a banked control store according to the present invention is shown. Instructions are initially received into the system by an instruction register 12. The instruction register 12 is connected to an instruction mapping memory 14 which in turn is connected to a register 16. A first valid flip-flop 18 is connected with the instruction register 12. A second valid flip-flop register 20 is connected with the register 16. The output of the register 16 comprising a memory map is connected to an address multiplexer 22. The output of address multiplexer 22 is connected to a control store address register 24 and to a single microinstruction flip-flop 26. A third valid flip-flop 28 is connected to the control store address register 24. A pipe purge control line 31 is connected to the reset input of the flip-flops 18, 20, 28. The line 31 also provides an input to an OR gate 29 which controls the reset input to a flip-flop 70 to be explained later.

An address select logic control network 30 is connected to the address multiplexer 22. The address select logic network 30 controls the functioning of the address multiplexer 22. A first source of input addresses for the addrress multiplexer 22, as previously described, is the input from the register 16 on a data path 17. A second source of input addresses on a data line 32 is from a branch address portion 34 of a memory data register 36. The branch address portion 34 of the memory data register 36 is output through an AND gate 38 and connected to the data line 32. A third input source of input addresses to the address multiplexer 22 is from a data line 40 which is the increment address furnished by an increment address unit 42.

The address select logic control network 30 receives three control inputs. A first control input is on a control line 44 which is an output from the single microinstruction flip-flop 26. A second control input is on a control line 46 from a PREXIT portion 48 which is part of the sequencing field output of the memory data register 36. The PREXIT portion 48 passes through an AND gate 50 whose output is connected to the control line 46. Finally a third control input to the address select control network 30 is on a control line 52 which is a control output from a branch logic network 54.

Various machine status bits from a central processing unit of a computer, including the pipeline, are provided as input bits to a microcode branch condition register 56 which forms a microcode branch condition operand from the various bits. This microcode branch condition operand is provided as the operand input to the branch logic network 54 to determine whether or not a conditional branch should be taken or not and this output is provided to the control line 52 from the branch logic network 54. A control input to the branch logic network 54 is provided on a control line 58 from an AND gate 60 which receives as an input the branch condition portion 62 of the memory data register 36. The control line 52 is connected to the reset input of the flip-flop 70 which controls the memory data register 36. An output of the flip-flop 70 represents the control input to the AND gates 38, 50, 60 which pass control information inputs as previously described. The flip-flop 70 also provides an intput to an AND gate 71 which is the output VALID bit used in connection with a synchronize function. A memory data portion 74 of the memory data register 36 is connected through an AND gate 80 and an output register 75 is connected through AND gates 76, 78 to provide control signals to the central processing unit.

A control store 90 includes a single micro- instruction memory 92 which receives an input from the control store address register 24 and has an output connected to a memory select network 94. A multiple microinstruction memory 96 also receives an input from the control store address register 24 and provides an output to the memory select network 94. The output of the memory select network 94 is connected to the input of the memory data register 36. The memory select network is controlled by a control line 98 which is connected to the output of the single microinstruction flip-flop 26.

As described, the sequencing field portion of the memory data register 36 contains the PREXIT portion 48. In addition, there is a unconditional branch portion 104, a subroutine call portion 106, a subroutine return portion 108, a SYNCHRONIZE portion 110 and a REPEAT portion 112. The function of the portions 104, 106, 108 is clear from their names. AND gates 114, 116, 118, 120, 122 are associated with and receive inputs from the portions 104, 106, 108, 110, 112, respectively. The other input to the AND gates 114, 116, 118, 120, 122 is provided from the flip-flop 70 in the same way as to the AND gates 38, 50, 60, 76, 78, 80. The AND gates 114, 116, 118 provide control inputs to the branch logic network 54 to indicate function. The AND gates 120, 122 provide control inputs to a REPEAT/SYNCHRONIZE logic network 100 to indicate the function to be performed. The network 100 receives a plurality of various condition inputs, as shown, relating to machine status valid bits and machine repeat conditions. These conditions might be various flags or other hardware test conditions appropriate to the instruction. A pipeline clocking logic unit 102 receives control inputs from the network 100 and sends appropriate clock enable signals to all registers. The pipeline valid flip-flops are also connected to the unit 102.

Generally, the banked control store may be explained as consisting of a microprogram unit consisting of an address multiplexer, a control store address register, a single microinstruction memory, a multiple microinstruction memory, a single microinstruction flip-flop, a memory select network, an address select logic unit, an increment address unit and a memory data register. Instructions are supplied by the instruction register 12. From the instruction register 12, the instruction opcode addresses the mapping memory 14. The mapping memory 14 provides the control store address of the microcode routine which executes the instruction. This address is then latched into the register 16 to be available to the microprogram unit.

The microprogram unit operates by continuously clocking in control store addresses to generate the appropriate control signals. The sequencing of the microcode is controlled by the address select logic network 30 and the address multiplexer 22. The microcode unit can get its address from the mapping memory 14 which is used to supply the address of the first microinstruction of an instruction. The mapping memory 14 also supplies the correct value to the loaded into the single microinstruction flip-flop 26. The output of the mapping memory contained in the memory data register 16 is selected whenever the single microinstruction flip-flop 26 is a one or the control signal from the PREXIT portion 48 on the control line 46 is a one. The microcode unit can get its address from the data line 32 which is used to supply the address whenever a branch is taken. The branch address is selected whenever the output of the branch logic network 54 on the control line 52 is a one.

The micro-code unit can also get its address from the increment address unit 42. In this way the microcode steps through the memory sequentially. Increment address selection control is the default select condition, the one selected when none of the others are specifically asserted. Each pipeline register rank, such as the instruction register 12, the register 16, the control store address register 24 or the memory data register 36 has an associated valid bit. Each of these valid bits are provided by the flip-flops 18, 20, 28, 70, respectively. The valid bit means that the data in the rank should be used as valid data. The microinstruction bits in the memory data register 36 are all gated with the flip-flop 70 and thus no output signals are asserted if the rank is invalid. The invalid condition is that when the output of the flip-flop 70 is a zero.

There are three specific operation types to described and the single microinstruction type of operation is the first to be described. In the operation, the last step of a previous instruction causes the address multiplexer 22 to select the map address on the line 17. The next clock cycle causes the map address to be latched into the control store address register 24. The single microinstruction flip-flop 26 is also set to one. At the next clock interval, the data read from the control store is latched into the memory data register 36 and the first address of the next instruction is latched into the control store address register 24. This process then repeats.

The next type of instruction to be described is the sequential multiple microinstruction. In this case, the first control store address of the instruction is latched into the control store address register 24. At this time the single microinstruction flip-flop 26 is set to zero. This address is then read from the control store and also incremented by the single microinstruction flip-flop 26. The next clock interval latches the microinstruction into the memory data register 36 and also latches the output of the increment address unit 42 as the next control store address. Thus, the execution of multiple microinstructions consists of stepping sequentially from the first address provided. The instruction is ended by setting the PREXIT bit from the PREXIT portion 48 on the control line 46 to be a one in the next to last microinstruction. This causes the address multiplexer 22 to select the map input during the next clock, thus initiating the next instruction.

The last type of instruction to be discussed is the sequential multiple microinstruction with conditional branching. In some instructions, the microcode which executes the instruction must make conditional decisions based on certain machine state bits. This microprogram control unit is capable of branching on any one of the bits in the microcode branch condition register 56. The microinstruction sequence fields specifies what branch condition will be tested and the branch address will occur if the branch condition is true. The conditional branch method used in this invention is based on prediction. In all multiple microinstruction sequences the normal next address is an incremented address. Thus while a branch decision is being resolved, the microprogram unit is predicting that the branch will not be taken. The effect of the branch being not taken is that the next address will be an increment address. If the prediction is true, then when the branch is resolved, the microcode sequencing simply continues with no delay.

If the branch condition is met, then the prediction of an increment address is wrong and several things must be done. First, the microinstruction that is clocked into the memory data register 36 as a result of the predicted address must be cancelled, since the branch was actually taken. This cancelling is done by clearing the flip-flop 70 with the branch taken signal on the control line 52. Note that all signals are gated with the flip-flop 70 as they are in effect cancelled. It should also be noted that this requires no additional logic, since the valid flip-flops exist in the memory pipeline for purging or clearing registers. Also, the branch address output on the data line 32 must be gated into the control store address register 24. This is done by the address multiplexer 22 selecting the branch address on the data line 32. Thus a branch taken, meaning a wrong prediction requires a two clock cycles. By understanding the branch probabilities and having the freedom to define the sense of the branch conditions, it is often possible to obtain a higher frequency of branch not taken, the faster path of resolution. The multiple microinstruction starts from the mapping memory 14 and the register 16. The instruction executes sequentially through the control store 90. When a conditional branch is encountered, if the branch is not taken, sequential execution continues. If the branch is taken, the branch address is loaded into the control store address register 24 and sequential execution begins from there. When the sequence is complete, the pipeline flow of instructions in memory is started again by the PREXIT bit in the next to the last micro-operand and being set to a one. This look-ahead feature causes the pipeline to start at the correct cycle time to supply the next instruction with no time delay.

Even when branches take a decision interval of 2 cycles, only one microinstruction was required not two. Thus, the branches are specified in a single microinstruction. This results in a saving of control store, since each branch requires only a single microinstruction instead of two. Further, the cancellation of the microinstruction resulting from a wrong guess requires essentially no extra hardware, since pipelines requires valid bits and purge signals anyway.

The SYNCHRONIZE portion 110 is used in conjunction with conditional branching to put the machine in Synchronize Mode. In this mode, the next microinstruction, which would normally contain the conditional branch, is held up until the specified branch condition is valid. This ensures that the microcode does not use a branch condition until it is valid. This implementation saves control store location and results in faster microcode branching. The REPEAT portion 112 causes a microinstruction to be repeated until a specified condition occurs. Both the REPEAT portion 112 and SYNCHRONIZE portion 110 operate bye controlling the network 100 to test its inputs. When the tested condition occurs, either the Repeat or Synchronize control mode signal is sent to the unit 102, as appropriate for control.

The above described banked control store is made up of two individual memories, one for single microinstructions and one for multiple microinstructions. The single microinstruction memory is much smaller than the multiple microinstruction memory since no sequencing field bits are required. This has the advantage that both memories may respond more quickly than a single memory of the same size because the internal delays of a small memory are shorter. The multiple microinstruction memory must have a sequencing field to define how to calculate the next control store address. The selection of memories is done by a bit derived from a control device, referred to as the single microinstruction flip-flop which is latched in every time a new instruction is started. The flip-flop defines the instruction as a single or multiple microinstruction and controls the memory select network for the duration of the instruction. This address instruction does not require any gate delay time as a result of hard wiring ANDing requirements and chip enable requirements.

A microprgram control is embedded in a pipeline computer and the microprogram control must therefore meet pipeline control requirements. A first requirement is that the pipeline must be capable of running at the maximum rate of one, single microinstruction per clock cycle. The section of the pipeline which supplies instructions to the microprogram control must have a signal to determine when to advance an instruction and when to stop sending instructions. Since no memory bits can be used directly to do this, because memory bits are immediately latched, a look-ahead technique is used. That is, the pipeline control must be predicted one clock cycle before it is required. For single microinstructions, this is done with the single microinstruction flip-flop in the control store address pipeline rank. This flip-flop bit is a 1 whenever the control store address being read is a single microinstruction. At the next clock cycle, the pipeline will advance such that the microinstruction just read is latched and the first control store address of the next instruction is latched into the control store address register. For multiple microinstructions, the pipeline flow of instruction must stop while the sequence of microinstructions is issued. This is done by the single microinstruction bit being zero during the execution stage. The pipeline flow of instructions is started again by a bit in the sequencing field of the multiple microinstruction. This bit, called the PREXIT bit is set to be a one in the next to the last microinstruction. This look-ahead feature causes the pipeline to start at the correct time to supply the next instruction with no time delay. This is always possible as multiple microinstructions have two or more microinstructions.

The sequencing field of the multiple microinstruction memory is also used to implement a REPEAT and a SYNCHONIZE function. The REPEAT bit in the sequencing field causes a microinstruction to be repeated or reissued at every instruction cycle to the processor until the condition register shows a true on a tested condition. Then the next instruction is issued in the instruction pipeline to the microcode memory.

Similarly, the sequencing field has another bit called the SYNCHRONIZE bit. This is used in conjunction with conditional branching and the processor operates in the synchronize mode. In this mode, the next microinstruction, which would normally contain the conditional branch, is held or pauses until the specified branch condition information becomes available or valid. This ensures that the microcode does not use a branch condition until it is valid. This implementation saves control store locations and results in faster microcode branching.

## Claims

1. A microprogrammed pipeline computer with probable branch predictions of conditional branching comprising: an address multiplexer (22) having input means (17) for receiving original microinstruction addresses derived from macroinstructions, input means (32) for receiving branch microinstruction addresses from an output register means (36), and input means (40) for receiving incremented microinstruction addresses, the selection of an output of the address multiplexer (22) being arranged to be controlled by an address select logic network (30); and microinstruction memory means connected between an output of the address multiplexer (22) and an input of the output register means (36), characterised in that the microinstruction memory means comprises a control store address register (24) for receiving the output of the address multiplexer (22), a single microinstruction memory (92) for receiving the output from the control store address register (24) and for producing a memory output, a multiple microinstruction memory (96) for receiving the output from the control store address register (24) and for producing an output, and memory select means (94) for receiving the outputs of the single microinstruction memory (92) and the multiple microinstruction memory (96) and for providing an output consisting of a selected memory output to the output register means (36), the memory select means (94) being arranged to be controlled by a single microinstruction flip-flop (26) which is connected to receive an output from the address multiplexer (22), and further characterised by comprising a branch logic network (54) for producing a control output which is provided to the address select logic network (30); means (56) for providing branch condition inputs to the branch logic network (30)' instruction register means (12) for receiving macro program instructions; instruction mapping memory means (14) for receiving instructions from the instruction register means (12) instruction map register means (16) for receiving the output of the instruction mapping memory means (14) and being connected to the input means (17) for transferring original microinstruction addresses derived from the mcaroinstruction to the address multiplexer (22); and first, second, third and fourth valid flip-flops (18, 20, 28, 70) which are connected in series and associated, respectively, with the instruction register means (12), the instruction map register means (16), the control store address register means (24) and the output register means (36), the first to fourth valid flip-flops being arranged to indicate valid data therein and to control purging of the respective register means which are clocked by a single clocking logic (102) during a single clock cycle, the branch logic network (54) providing, in operation, a control signal to at least one of the flip-flops in the event a branch is taken to purge the contents of the respective register means.

2. A pipeline computer as claimed in claim 1 characterised in that the branch logic network (54) is connected to the fourth valid flip-flop (70) to provide a control signal in the event a branch is taken to purge the contents of the output register means (36).

3. A pipeline computer as claimed in claim 1 or 2 characterised in that the output register means (36) comprises a PREXIT output control signal means (48) which is connected with the address select logic network (30) so that when the next to last microinstruction is provided in a series of sequentially produced microinstructions, the PREXIT output control signal means is activated to cause an original instruction to be gated to the control store at the proper time to provide an uninterrupted flow of output microinstructions.

4. A pipeline computer as claimed in any preceding claim characterised in that the output register means (36) contains a REPEAT output control signal means (112), and further comprising logic network means (122) for controlling the pipeline to repeat a microinstruction until a predetermined condition occurs, in response to a REPEAT output control signal.

5. A pipeline computer as claimed in any preceding claim characterised in that the output register means (36) contains a SYNCHRONIZE output control signal means (110), and further comprising logic network means (120) for controlling the pipeline to hold back a conditional branch instruction until a predetermined condition occurs, in response to a SYNCHRONIZE output control signal.

6. A method of operating a microprogrammed pipeline computer as claimed in claim 1, characterised in that: the input means (17) of the address multiplexer (22) receives original microinstruction addresses derived from macroinstructions, the input means (32) for receiving branch microinstruction addresses receives branch microinstruction addresses from the output register means (36), and the input means (40) for receiving incremented microinstruction addresses receives incremented microinstruction addresses from an increment address unit (42), the selection of an output of the address multiplexer (22) being controlled by the address select logic network (30); the control store address register (24) receives the output of the address multiplexer (22); the single microinstruction memory (92) receives the output from the control store address register (24) and produces a memory output; the multiple microinstruction memory (96) receives the output from said control store address register (24) and produces an output; the memory select means (94) receives the outputs of the single microinstruction memory (92) and the multiple microinstruction memory (96) and provides an output consisting of a selected memory output to the output register means (36), the memory select means (94) being controlled by the single microinstruction flip-flop (26) which receives an output from the address multiplexer (22); the branch logic network (54) produces a control output which is provided to the address select logic network (30); the said means (56) provides branch condition inputs to the branch logic network (30); the instruction registers means (12) receives macro program instructions; the instruction mapping memory means (14) receives instructions from the instruction register means (12); the instruction map register means (16) receives the output of the instruction mapping memory means (14) and transfers original microinstruction addresses derived from the macroinstruction to the address multiplexer (22); the first, second, third and fourth valid flip-flops (18, 20, 28, 70) control purging of the respective register means which are clocked by a single clocking logic (102) during a single clock cycle; and the branch logic network (54) provides a control signal to at least one of the flip-flops in the event a branch is taken to purge the contents of the respective register means.

## Patentansprüche

1. Mikroprogrammierter Pipelinecomputer mit Vorhersagen für Sprungwahrscheinlichkeiten von bedingten Sprüngen, mit einem Adressenmultiplexer (22), der Eingangseinrichtungen (17) zum Empfang ursrünglicher, von Makrobefehlen abgeleiteter Mikrobefehlsadressen, Eingangseinrichtungen (32) zum Empfang von Mikrobefehls-Sprungadressen von einer Ausgangsregistereinrichtung (36) und Eingangseinrichtung (40) zum Empfang weitergeschalteter Mikrobefehlsadressen aufweist, wobei die Auswahl eines Ausgangs des Addressenmultiplexers (22) durch ein Adressenauswahl-Logiknetzwerk (30) gesteuert wird, und mit Mikrobefehls-Speichereinrichtungen, die zwischen einem Ausgang des Adressenmultiplexers (22) und einem Eingang der Ausgangsregisteinrichtung (36) eingeschaltet sind, dadurch gekennzeichnet, daß die Mikrobefehls-Speichereinrichtung ein Steuerspeicheraddressenregister (24) zum Empfang des Ausgangs des Adressenmultiplexers (22), einen Einzelmikrobefehlsspeicher (92) zum Empfang des Ausgangs von dem Steuerspeicheraddressenregister (24) und zur Erzeugung eines Speicherausgangs, einen Mehrfachmikrobefehlsspeicher (96) zum Empfang des Ausgangs von dem Steuerspeicheradressenregister (24) und zur Erzeugung eines Ausgangs, und Speicherauswahleinrichtungen (94) zum Empfang der Ausgänge des Einzelmikrobefehlsspeichers (92) und des Mehrfachmikrobefehlsspeichers (96) und zur Lieferung eines Ausgangs aufweisen, der aus einem ausgewählten Speicherausgang an die Ausgangsregistereinrichtung (36) besteht, wobei die Speicherauswahleinrichtungen (94) durch eine Einzelmikrobefehls-Flipflop-schaltung (26) steuerbar sind, die zum Empfang eines Ausgangs von dem Adressenmultiplexer (22) angeschaltet ist, und daß ein Sprunglogiknetzwerk (54) zur Erzeugung eines Steuerausgangs, der dem Adressenauswahllogiknetzwerk (30 zugeführt wird Einrichtungen (56) zur Lieferung von Sprungbedingungseingängen an das Sprunglogiknetzwerk (30), Befehlsregistereinrichtungen (12) zum Empfang von Makroprogrammbefehlen, Befehlsbildspeichereinrichtungen (14) zum Empfang von Befehlen von den Befehlsregistereinrichtungen (12), Befehlsbildregistereinrichtungen (16), die den Ausgang der Befehlsbildspeichereinrichtungen (14) empfangen und mit den Eingangseinrichtungen (17) Übertragung der ursprünglichen von dem Makrobefehl abgeleiteten Mikrobefehlsadressen an den Adressenmultiplexer (22) verbunden sind, und erste, zweite, dritte und vierte Gültigkeits-Flip-Flop-Schalttungen (18, 20, 28, 70) vorgesehen sind, die Serie geschaltet sind und jeweils den Befehlsregistereinrichtungen (12), den Befehlsbildregistereinrichtungen (16), den Steuerspeicheradressenregistereinrichtungen (24) bze. den Ausgangsregistereinrichtungen (36) zugeordnet sind, wobei die ersten bis vierten Gültigkeits-Flip-Flop-Schaltungen so ausgebildet sind, daß sie darin enthaltene gültige Daten anzeigen und das Löschen der jeweiligen Registereinrichtungen steuern, die durch eine Einzeltaktlogik (102) während eines einzigen Taktzyklus taktgesteuert werden, wobei das Sprunglogiknetzwerk (54) im Betrieb ein Steuersignal an zumindest eine der Flip-Flop-Schaltungen liefert, wenn ein Sprung vorgenommen wird, um den Inhalt der jeweiligen Registereinrichtungen zu löschen.

2. Pipelinecomputer nach Anspruch 1, dadurch gekennzeichnet, daß das Sprunglogiknetzwerk (54) mit der vierten Gültigkeits-Flip-Flop-Schaltung (70) verbunden ist, um ein Steuersignal dann zu liefern, wenn ein Sprung vorgenommen wird, um dem Inhalt der Ausgangsregistereinrichtungen (36) zu löschen.

3. Pipelinecomputer nach Anspruch 1 oder 2, dadurch gekennzeichnet, daß die Ausgangsregistereinrichtungen (36) eine PREXIT-Ausgangssteuersignaleinrichtung (48) aufweisen, den mit dem Adressenauswahllogiknetzwerk (30) derart verbunden ist, daß dann, wenn der vorletzte Mikrobefehl in einer Reihe von aufeinanderfolgend erzeugten Mikrobefehlen geliefert wird, die PREXIT-Ausgangssteuersignaleinrichtung aktiviert wird, um zu bewirken, daß ein ursprünglicher Befehl torgesteuert an den Steuerspeicher zur richtigen Zeit geliefert wird, um einen ununterbrochenen Fluß von Ausgangsmikrobefehlen zu erzielen.

4. Pipelinecomputer nach einem der vorhergehenden Ansprüche, dadurch gekennzeichnet, daß die Ausgangsregistereinrichtung (36) eine REPEAT-Ausgangssteuersignaleinrichtung (112) aufweist und unß Logiknetzwerkeinrichtungen (122) vorgesehen sind, die in Abhängigkeit von einem REPEAT-Ausgangssteuersignal die Pipeline derart steuern, daß ein Mikrobefehl wiederholt wird, bis eine vorgegebene Bedingung auftritt.

5. Pipelinecomputer nach einem der vorhergehenden Ansprüche, dadurch gekennzeichnet, daß die Ausgangsregistereinrichtung (36) eine SYNCHRONIZE-Ausgangssteuereinrichtung (110) aufweist und daß Logiknetzwerkeinrichtungen (120) vorgesehen sind, die in Abhängigkeit von einem SYNCHRONIZE-Ausgangssteuersignal die Pipeline derart steuern, daß ein bedingter Sprungbefehl zurückgehalten wird, bis eine vorgegebene Bedingung auftritt.

6. Verfahren zum Betrieb eines mikroprogrammierten Pipelinecomputers nach Anspruch 1, dadurch gekennzeichnet, daß die Eingangseinrichtungen (17) des Adressenmultiplexers (22) ursprüngliche, von Makrobefehlen abgeleitete Mikrobefehlsadressen empfangen, daß die Eingangseinrichtungen (32) zum Empfang von Sprungmikrobefehlsadressen von den Ausgangsregistereinrichtungen (36) Sprungmikrobefehlsadressen empfangen, daß die Eingangseinrichtungen (40) zum Empfang weitergeschalteter Mikrobefehlsadressen weitergeschaltete Mikrobefehlsadressen von einer Adressenweiterschalteinheit (42) empfangen, daß die Auswahl eines Ausgangs des Adressenmultiplexers (22) durch das Adressenauswahllogiknetzwerk (30) gesteuert wird, daß das Steuerspeicheradressenregister (24) den Ausgang des Adressenmultiplexers (22) empfängt, daß der Einzelmikrobefehlsspeicher (92) den Ausgang von dem Steuerspeicheradressenregister (24) empfängt und einen Speicherausgang erzeugt, daß der Mehrfachmikrobefehlsspeicher (96) den Ausgang von dem Steuerspeicheradressenregister (24) empfängt und einen Ausgang erzeugt, daß die Speicherauswahleinrichtungen (94) die Ausgänge des Einzelmikrobefehlsspeichers (92) und des Mehrfachmikrobefehlsspeichers (96) empfange une einen aus einem ausgewählten Speicherausgang bestehenden Ausgang an die Ausgangsregistereinrichtung (36) liefern, daß die Speicherauswahleinrichtungen (94) durch die Einzelmikrobefehls-Flip-Flop-Schaltung (26) gesteuert sind, die einen Ausgang von dem Addressenmultiplexer (22) empfängt, daß das Sprunglogiknetzwerk (54) einen Steuerausgang liefert, der dem Adressenauswahllogiknetzwerk (30) zugeführt wird, daß die genannten Einrichtungen (56) Sprungbedingungseingänge an das Sprunglogiknetzwerk (30) liefern, daß die Befehlsregistereinrichtungen (12) Makroprogrammbefehle empfangen, daß die Befehlsbildspeichereinrichtungen (14) Befehle von den Befehlsregistereinrichtungen (12) empfangen, daß die Befehlsbildregistereinrichtungen (16) den Ausgang der Befehlsbildspeichereinrichtungen (14) empfange und ursprüngliche, von dem Makrobefehl abgeleitete Mikrobefehlsadressen an den Adressenmultiplexer (22) überführen, daß die ersten, zweiten, dritten und vierten Gültigkeits-Flip-Flop-Schaltungen (18, 20, 28, 70) das Löschen der jeweiligen Registereinrichtungen steuern, die durch eine Einzeltaktlogik (102) während eines Einzeltaktzyklus taktgesteuert werden, und daß das Sprunglogiknetzwerk (54) ein Steuersignal an zumindest eine der Flip-Flop-Schaltungen liefert, wenn ein Sprung vorgenommen wird, um den Inhalt der jeweiligen Registereinrichtungen zu löschen.

## Revendications

1. Calculateur pipe-line micro-programmé avec prévision de branchement probable de branchement conditionnel, comprenant: un multiplexeur d'addresses (22) comprenant un dispositif d'entrée (17) pour recevoir des adresses de micro-instructions initiales dérivées de macro-instructions, un dispositif d'entrée (32) pour recevoir des addresses de micro-instructions de branchement provenant d'une registree de sortie (36) et un dispositif d'entrée (40) pour recevoir des adresses de micro-instructions incrémentées, la sélection d'une sortie du multiplexeur d'addresses (22) étant agencée pour être contrôlée par un réseau logique de sélection d'adresses (30); et une mémoire de micro-instructions connectée entre une sortie du multiplexeur d'addresses (22) et une entrée du registre de sortie (36), caractérisé en ce que la mémoire de micro-instructions comporte un registre d'adresses de mémoire de commande (24) pour recevoir la sortie du multiplexeur d'addresses (22), une mémoire de micro-instructions simples (92) pour recevoir la sortie du registre d'adresses de mémoire de commande (24) et pour produire une sortie de mémoire, une mémoire de micro-instructions multiples (96) pour recevoir la sortie du registre d'adresses de mémoire de commande (24) et pour produire une sortie et un dispositif de sélection de mémoire (94) pour recevoir les sorties de la mémoire de micro-instructions simples (92) et de la mémoire de micro-instructions multiples (96) et pour produite une sortie consistant en une sortie de mémoire sélectionée pour le registre de sortie (36), le dispositif de sélection de mémoire (94) étant agencé pour être commandé par un circuit bistable (26) de micro-instructions simples qu iest connecté pour recevoir une sortie du multiplexeur d'addresses (22), et caractérisé en outre en ce qu'il comporte un réseau logique de branchement (54) pour produire une sortie de commande qui est fournie au réseau logique de sélection d'adresses (30); un dispositif (56) pour fournir des entrées de condition de branchement au réseau logique de branchement (30); un registre d'instruction (12) pour recevoir des instructions de macro-programmes; une mémoire de relevé d'instructions (14) pour recevoir des instructions du registre d'instructions (12); un registre de relevés d'instructions (16) pour recevoir la sortie de la mémoire de relevés d'instructions (14) et connecté au dispositif d'entrée (17) pour transférer des adresses de micro-instructions initiales dérivées de la macro-instruction vers le multiplexeur d'adresses (22); et un premier, un second, un troisième et un quatrième circuits bistables valides (18, 20, 28, 70) qui sont connectés en série et associés respectivement avec le registre d'instruction (12), le registre de relevé d'instructions (16), le registre d'addresses de mémoire de commade (24) et le registre de sortie (36), les circuits bistables valides du premier au quatrième ètant agencés pour indiquer des données valides et pour commander la purge des registres respectifs qui sont commandés par horloge par un seul circuit logique de commande d'horloge (102), pendant un seul cycle d'horloge, le réseau logique de branchement (54) fournissant, en fonctionnement, un signal de commande à l'un au moins des circuits bistables dans le cas où un branchement est effectué pour purger le contenu du registre respectif.

2. Calculateur pipe-line selon la revendication 1, caractérisé en ce que le réseau logique de branchement (54) est connecté au quatrième circuit bistable valide (70) pour produire un signal de commande dans le cas où un branchement est effectué, pour purger le contenu du registre de sortie (36).

3. Calculateur pipe-line selon la revendication 1 Ou 2, caractérisé en ce que le registre de sortie (36) comporte un dispositif de signaux de commande de sortie PREXIT (48) qui est connecté au réseau logique de sélection d'adresses (30) de manière que lorsque la suivante à la dernière micro-instruction sont produites en une série de micro-instructions séquentielles, le dispositif de signaux de commande de sortie PREXIT soit activé pour qu'une instruction initiale soit aiguillée vers la mémoire de commande à l'instant correct pour produite une circulation ininterrompue des micro-instructions de sortie.

4. Calculateur pipe-line selon l'une quelconques des revendications précédentes, caractérisé en ce que le registre de sortie (36) contient un dispositif de signaux de commande de sortie REPETITION (112) et comporte en outre un réseau logique (122) pour commander le pipe-line pour répéter une micro-instruction jusqu'à ce qu'une condition prédéterminée apparaisse en résponse à un signal de commande de sortie REPETITION.

5. Calculateur pipe-line selon l'une quelconque des revendication précédentes, caractérisé en ce que le registre de sortie (36) contient un dispositif de signaux de commandes de sortie SYNCHRONIZATION (110) et comprenant en outre un réseau logique (120) pour commander le pipe-line afin de ramener l'instruction de branchement conditionnel jusqu'à ce qu'une condition prédéterminée apparaisse en résponse à un signal de commande de sortie SYNCHRONIZATION.

6. Procédé de commande d'une calculateur pipe-line micro-programmé selon la revendication 1, caractérise en ceu que: le dispositif d'entrée (17) du multiplexeur d'addresses (22) reçoit des adresses de micro-instructions initiales dérivées de macro-instructions, le dispositif d'entrée (32) destiné à recevoir des adresses de micro-instructions de branchement reçoit des adresses de micro-instructions de branchement provenant du registre de sortie (36) et le dispositif d'entrée (40) destiné à recevoir des adresses de micro-instructions incrémentées reçoit des adresses de microinstructions incrémentées d'une unité d'adresses d'incréments (42), la sélection d'une sortie du multiplexeur d'adresses (22) étant commandée par le réseau logique de sélection d'adresses (30); le registre d'adresses de mémoire de commande (24) recevent la sortie du multiplexeur d'addresses (22); la mémoire de micro-instructions simples (92) recevant la sortie du registre d'adresses de mémoire de commande (24) et produisant une sortie de mémoire; la mémoire de micro-instructions multiples (96) recevant la sortie dudit registre d'adresses de mémoire de commande (24) produisant une sortie; le dispositif de sélection de mémoire (94) recevent les sortie de la mémoire de micro-instructions simples (92) et de la mémoire de micro-instructions multiples (96) et produisant une sortie consistant en une sortie de mémoire sélectionnée pour le registre de sortie (36), le dispositif de sélection de mémoire (94) étant commandé par le circuit bistable (26) de micro-instructions simples qui reçoit une sortie du multiplexeur d'addresses (22); le réseau logique de branchement (54) produisant une sortie de commande qui est fournie au circuit logique de sélection d'addresses (30); ledit dispositif (56) produisant des entrées de condition de branchement pour le réseau logique de branchement (30); le registre d'instructions (12) recevant des instructions de macro-programmes, le mémoire de relevé d'instructions (14) recevant des instructions provenant du registre d'instructions (12); le registre de relevé d'instructions (16) recevant la sortie de la mémoire de relevé d'instructions (14) et transférant le adresses de micro-instructions initiales dérivées de la macro-instruction au multiplexeur d'adresses (22), le premier, le second, le troisième et le quatrième circuits bistables valides (18, 20, 28, 70) commandant la purge des registres respectifs qui sont commandés par horloge par un seul circuit logique d'horloge (102) pendant un seul cycle d'horloge, et le réseau logique be branchement (54) fournissant un signal de commande à l'une au moins des circuits bistables dans le cas où un branchement est effectué pour purger le contenu du registre respectif.

FIG.2A

*FIG.1B*